# EUROPEAN PATENT SPECIFICATION

(11) **EP 3 755 649 B1**
(45) Date of publication and mention of the grant of the patent: **20.09.2023**
(21) Application number: 19756764.7
(22) Date of filing: 20.02.2019
(51) Int. Cl.: B65G 54/02, G01N 35/04

(54) **CLINICAL ANALYZERS AND METHODS FOR TRANSPORTING CUVETTES**
KLINISCHE ANALYSEGERÄTE UND VERFAHREN ZUM TRANSPORT VON KÜVETTEN
ANALYSEURS CLINIQUES ET PROCÉDÉS DE TRANSPORT DE CUVETTES

(30) Priority: 23.02.2018 US 201862634334 P
(43) Date of publication of application: 30.12.2020
(73) Proprietor: Siemens Healthcare Diagnostics, Inc., Tarrytown, NY 10591 (US)
(72) Inventor: COHEN, Beri, New York 10530 (US)
(74) Representative: Schweitzer, Klaus
(86) International application number: PCT/US2019/018718
(87) International publication number: WO 2019/164904

(56) References cited:
- US-A- 5 270 007
- US-A- 5 333 717
- US-A- 5 587 129
- US-A1- 2011 124 029
- US-A1- 2016 169 925
- US-B2- 9 347 964

## Description

### CROSS-REFERENCE TO RELATED APPLICATIONS

This application claims priority to U.S. Provisional Application Serial No. 62/634,334 filed on February 23.

### FIELD

The present disclosure relates to clinical analyzers using cuvettes and, more particularly, to devices and methods for transporting cuvettes within clinical analyzers.

### BACKGROUND

Clinical analyzers may use individual cuvettes to perform reactions and/or transport liquids. The cuvettes are loaded into a cuvette hopper and then retrieved from the cuvette hopper for transport to other locations within the clinical analyzer. The cuvettes may bunch up and clog transport systems if they are not singulated prior to transport.

US 2016/0169925 A1 and US 5,587,129 disclose two known singulation systems of clinical analyzers.

### SUMMARY

In one aspect, a clinical analyzer according to claim 1 is provided.

In another aspect, a method of transporting cuvettes according to claim 13 in a clinical analyzer as claimed in claim 1 is provided.

Numerous other aspects are provided in accordance with these and other embodiments of the disclosure. Other features and aspects of embodiments of the disclosure will become more fully apparent from the following detailed description, the appended claims, and the accompanying drawings.

### BRIEF DESCRIPTION OF THE DRAWINGS

The drawings, described below, are for illustrative purposes and are not necessarily drawn to scale. The drawings are not intended to limit the scope of the disclosure in any way.
FIG. 1A illustrates a schematic top view of a portion of a clinical analyzer in a first state including a cuvette loading apparatus and an incubation ring according to embodiments.
FIG. 1B illustrates a partial front view of the clinical analyzer of FIG. 1A according to embodiments.
FIG. 1C illustrates a schematic top view of a portion of a clinical analyzer in a second state including a cuvette loading apparatus and an incubation ring according to embodiments.
FIG. 1D illustrates a partial front view of the clinical analyzer of FIG. 1C according to embodiments.
FIG. 1E illustrates a schematic top view of a portion of a clinical analyzer in a third state including a cuvette loading apparatus and an incubation ring according to embodiments.
FIG. 1F illustrates a partial front view of the clinical analyzer of FIG. 1E according to embodiments.
FIG. 1G illustrates a schematic partial side view of a portion of a clinical analyzer in a fourth state including a cuvette loading apparatus and an incubation ring according to embodiments.
FIG. 2A illustrates an isometric view of a cuvette according to embodiments.
FIG. 2B illustrates a side elevation view of a cuvette according to embodiments.
FIG. 2C illustrates a front elevation view of a cuvette according to embodiments.
FIG. 2D illustrates a top plan view of a cuvette according to embodiments.
FIG. 3 illustrates a side, cross-sectional view of a cuvette loading apparatus and a cuvette hopper according to embodiments.
FIG. 4 illustrates a side, cross-sectional view an end of a plunger used in a cuvette loading apparatus according to embodiments.
FIG. 5 illustrates a method of transporting cuvettes within a clinical analyzer according to embodiments.

### DETAILED DESCRIPTION

Reference will now be made in detail to the example embodiments of this disclosure, which are illustrated in the accompanying drawings. Wherever possible, the same reference numbers will be used throughout the drawings to refer to the same or like parts throughout the several views. Features of the various embodiments described herein may be combined with each other, unless specifically noted otherwise.

Clinical analyzers may use individual cuvettes to mix and/or transport liquids. These clinical analyzers include cuvette hoppers that are filled with randomly oriented cuvettes. Mechanisms within the clinical analyzers retrieve cuvettes from the cuvette hoppers and deliver them to locations within the clinical analyzers. In some embodiments, the mechanisms transport the cuvettes from cuvette hoppers to incubation rings where the cuvettes are loaded into receptacles one at a time and in a specific orientation. If the cuvettes are not loaded one at a time, the cuvettes may jam and clog transport mechanisms within the clinical analyzers.

Clinical analyzers disclosed herein include at least one chute extending between a first location and a second location, such as between a cuvette hopper and an incubation ring. Gates moveable relative to the chute may create staging areas for the cuvettes where one cuvette at a time is allowed to pass the gates. A space approximately the size of a cuvette may separate a first gate and a second gate. During operation, both gates are extended so as to prevent cuvettes from moving on the chute. A first gate may open or retract to enable a first cuvette to enter the space between the first gate and the second gate. The first gate may then close to singulate or isolate the first cuvette. The second gate may then retract to enable the first cuvette to move along the chute. In some embodiments, the first cuvette may slide off the chute and into a receptacle in the incubation ring. Thus, one cuvette at a time is allowed to move on the chute to the incubation ring, which prevents the above described clogging.

Some embodiments of the clinical analyzers include cams that are moveable relative to the first gate and the second gate. Movement of the cams causes the first gate and the second gate to extend onto and retract from the chute. Some embodiments of the clinical analyzers include a single drive mechanism that operates the aforementioned cams, which may reduce costs and simplify the clinical analyzers.

Some embodiments of the clinical analyzers include a plunger that seats the cuvettes in a location, such as in receptacles in the incubation ring. The plunger may include a sensor that senses pressure to determine if the plunger has contacted and/or seated a cuvette. The plunger may contact top portions of the cuvettes or extend into the cuvettes. The plunger may or may not move with the cams.

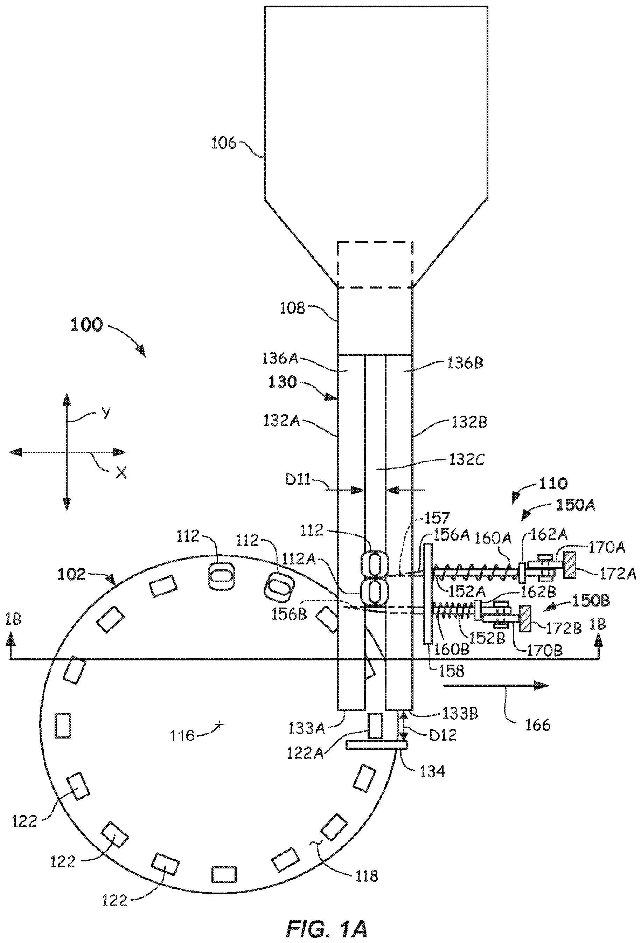

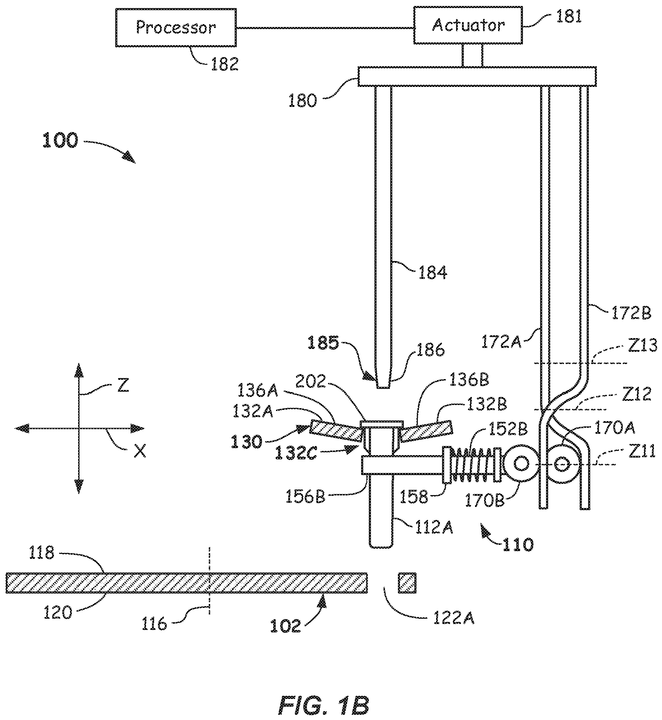

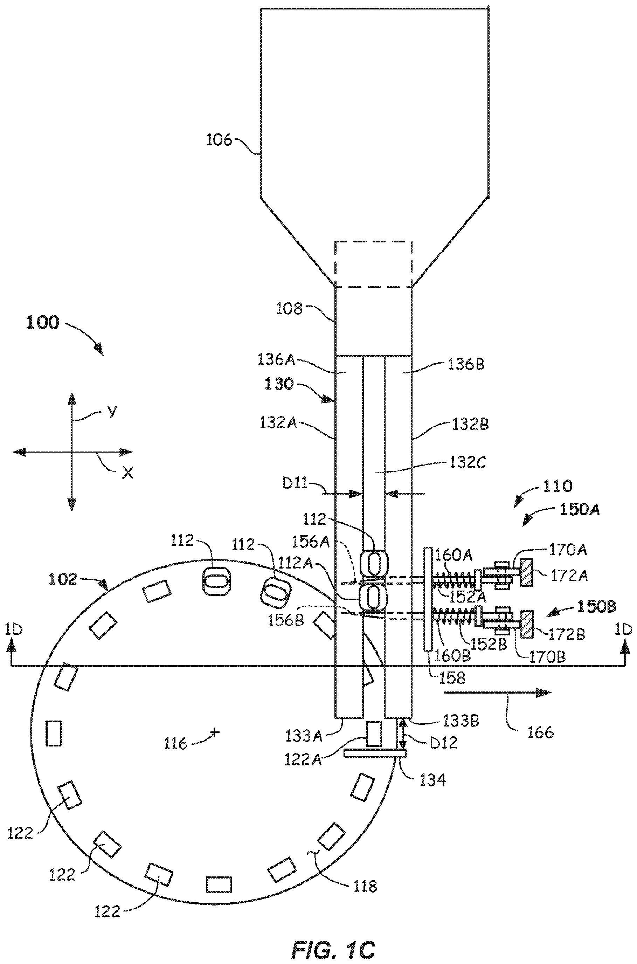

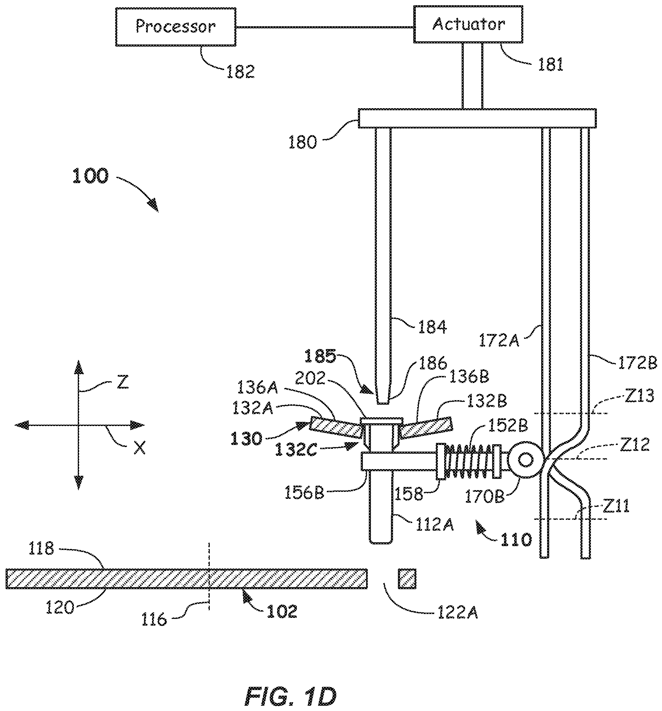

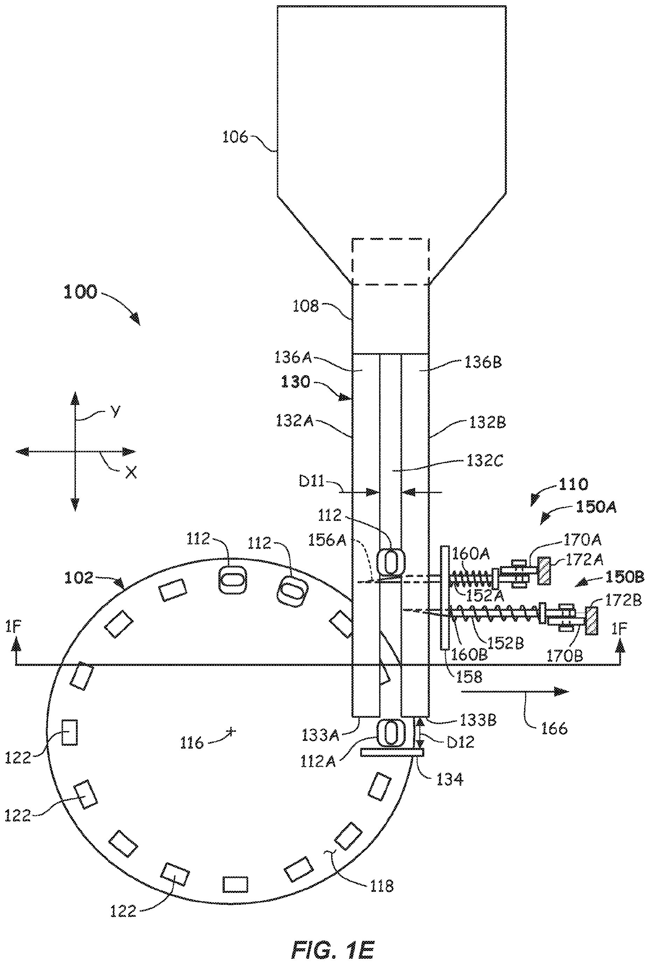

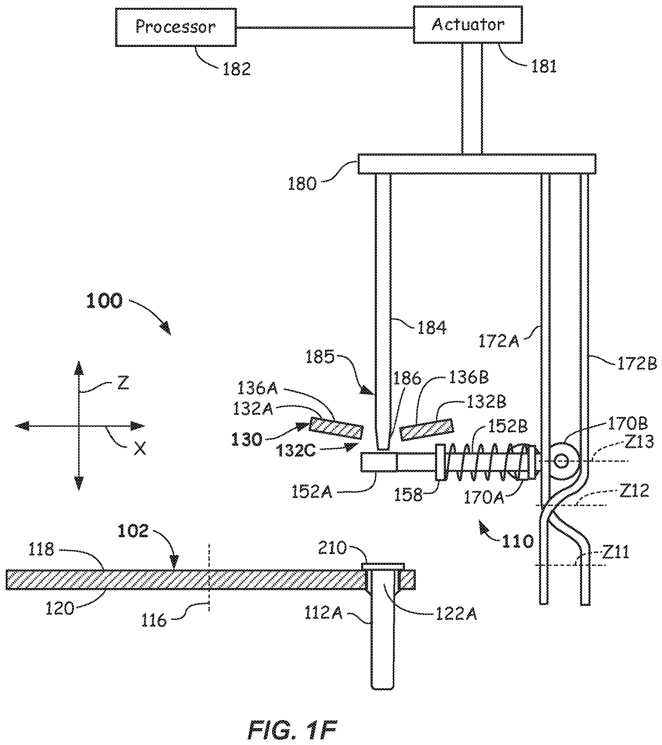

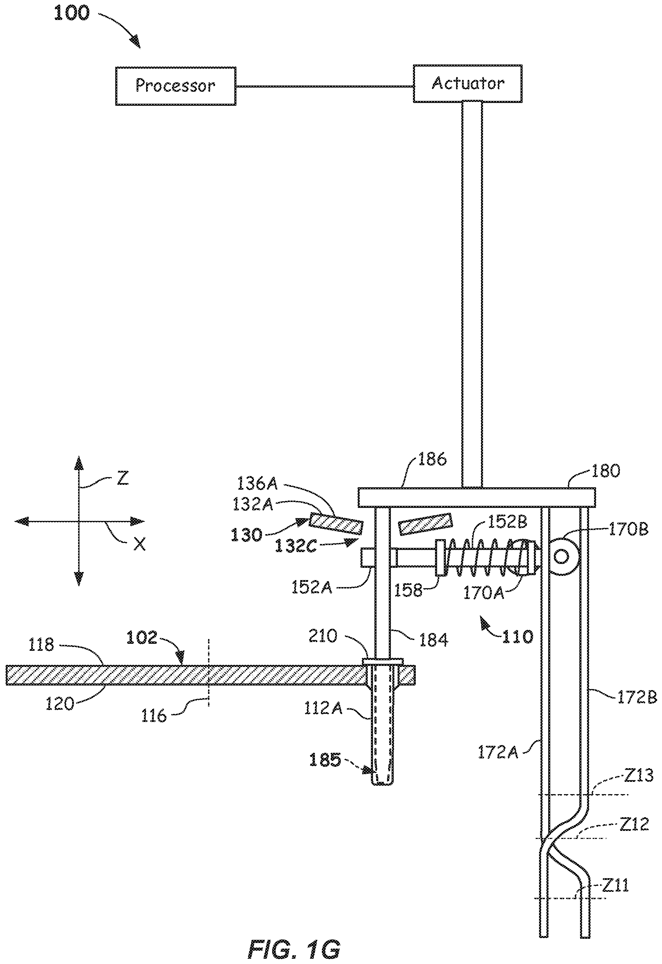

Further details of example embodiments of clinical analyzers including cuvette loading assemblies and methods of transporting cuvettes are described with reference to FIGs. 1-10 herein.

Reference is now made to FIGs. 1A and 1B. FIG. 1A shows a top plan view of a portion of a clinical analyzer 100 in a first state and FIG. 1B shows a partial side, cross-sectional view of the clinical analyzer 100. The view of the clinical analyzer 100 shown in FIG. 1A includes an incubation ring 102, a cuvette hopper 106, a feeder 108, and a cuvette loading assembly 110. Several cuvettes 112 are shown at different locations in the clinical analyzer 100.

The incubation ring 102 may be a circular device that is rotatable about an axis or centerpoint 116. The incubation ring 102 may have an upper surface 118, a lower surface 120 (FIG. 1B) and a plurality of receptacles 122 extending between the upper surface 118 and the lower surface 120. Each of the receptacles 122 is configured to receive a cuvette 112. For example, the cuvette loading assembly 110 may load cuvettes 112 into individual receptacles 122 in the incubation ring 102 one at a time as the incubation ring 102 rotates about the centerpoint 116. The clinical analyzer 100 depicted in FIGs. 1A and 1B is in a first state where a cuvette 112A is in a staging location and is set to be received in a receptacle 122A in the incubation ring 102.

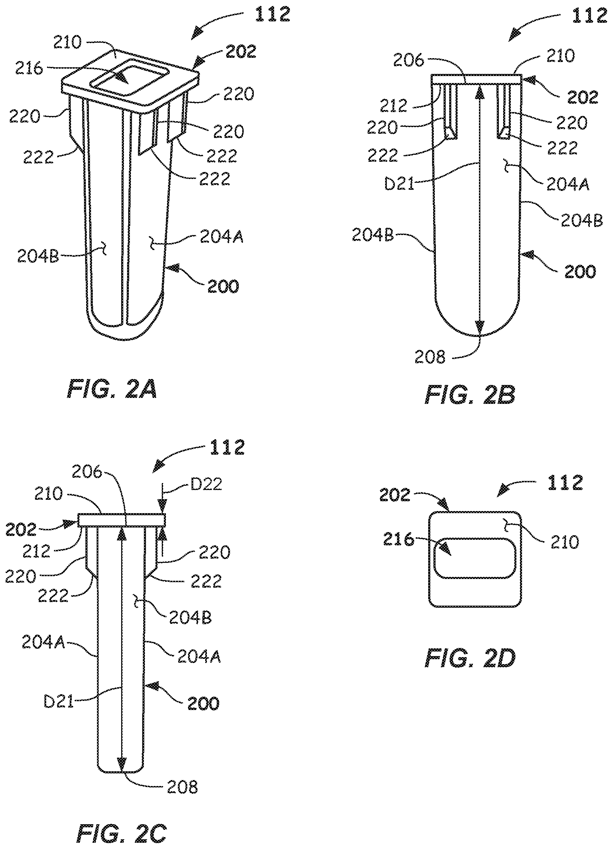

Additional reference is made to FIGs. 2A-2D, which show an isometric view, a side elevation view, a front elevation view, and a top plan view, respectively, of a cuvette 112. The cuvettes 112 may have configurations other than those shown in FIGs. 2A-2D. The cuvette 112 may include a container portion 200 and a lip 202. The container portion 200 is configured to hold a liquid (e.g., a reagent or reaction mixture). The cross-sectional shape of the container portion 200 may be somewhat rectangular having wide sides 204A and narrow sides 204B, wherein the wide sides 204A are wider than the narrow sides 204B. The container portion 200 may include an upper end 206 and a lower end 208 separated by a distance D21. The distance D21 may be approximately 1.49 inches (3.77cm). The overall length of the cuvette 112 including the container portion 200 and the lip 202 may be approximately 1.5 inches (3.8cm).

The lip 202 may enable alignment and transport of the cuvette 112. For example, the cuvette 112 may be supported by the lip 202 during transport of the cuvette 112. The lip 202 may have an upper surface 210 and a lower surface 212. The lip 202 may have a thickness D22 (FIG. 2C) of approximately 0.042 inches (1.02mm) between the upper surface 210 and the lower surface 212. The lip 202 may include an opening 216 extending between the upper surface 210 and the lower surface 212 and into the container portion 200. The opening 216 enables liquids to be dispensed into and extracted (e.g., aspirated) from the container portion 200.

The cuvette 112 may include one or more support members 220 coupled between the lower surface 212 of the lip 202 and the wide sides 204A of the container portion 200. One or more of the support members 220 may include a beveled side 222. Transport mechanisms (not shown in FIGs. 2A-2D) may contact the beveled sides 222 during transport of the cuvette 112 as described below. The beveled sides may enhance the ability of the cuvette 112 to slide along the chute 130 and may provide alignment mechanisms for the cuvette 112.

Additional reference is made to FIGs. 1A and 1B. The cuvette hopper 106 may store a plurality of cuvettes 112. For example, a user may load the cuvette hopper 106 by loading a plurality of cuvettes 112 into the cuvette hopper 106. The cuvettes 112 may be randomly piled or located in the cuvette hopper 106. The feeder 108 may retrieve cuvettes 112 from the cuvette hopper 106 and align them in a predetermined orientation to be received by the cuvette loading assembly 110 as described herein.

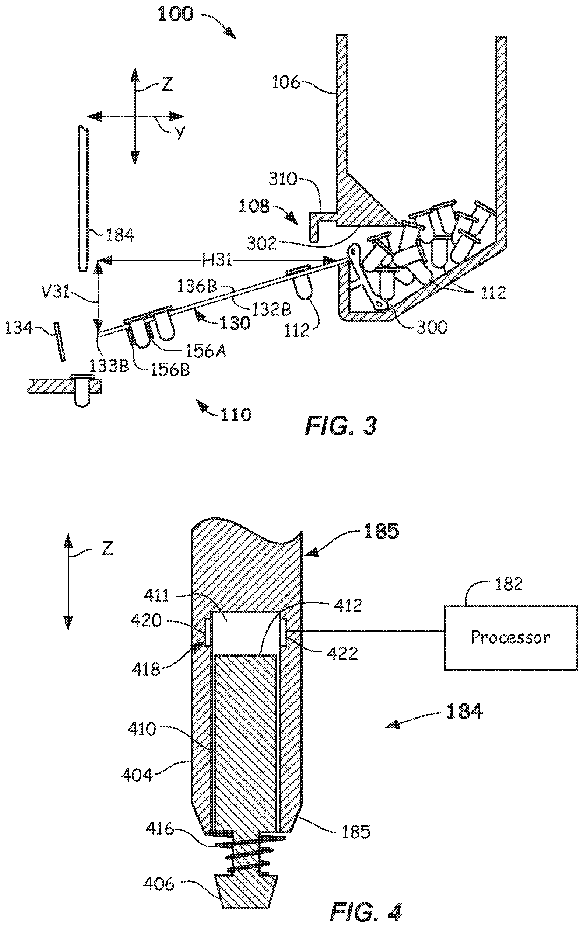

Additional reference is made to FIG. 3, which shows a cross-sectional view of the cuvette hopper 106 and feeder 108 coupled to the cuvette loading assembly 110. The feeder 108 may include a tumbler or wheel 300 or other device that orients and/or separates (e.g., singulates) cuvettes 112. A roof 302 or other device may be located above the wheel 300 so as to limit the load on the wheel 300 by reducing the number of cuvettes 112 proximate or above the wheel 300. Thus, the roof 302 reduces the possibility of cuvettes 112 becoming jammed proximate the wheel 300. The roof 302 may further direct cuvettes 112 to the feeder 108. Other mechanisms may be used to singulate and orient the cuvettes 112 in the cuvette hopper 106.

The feeder 108 may feed and/or orient the cuvettes 112 onto a chute 130 and may include a guide 310 or other devices used to feed and/or orient the cuvettes 112 on the chute 130. With additional reference to FIGs. 1A and 1B, the chute 130 may include a first rail 132A and a second rail 132B with a space 132C therebetween. The space 132C may be a distance D11 between the first rail 132A and the second rail 132B and may be wide enough to receive the container portion 200 (FIG. 2) of a cuvette 112. For example, the distance D11 may be slightly greater than the width of a narrow side 204B of a cuvette 112 proximate the upper end 206 of the container portion 200. The space 132C enables the lip 202 or the beveled sides 222 of a cuvette 112 to contact the first rail 132A and the second rail 132B. Such contact enables the cuvettes 112 to slide along the chute 130 as described herein. Other embodiments may include a plurality of chutes. For example, a first chute may extend in a first direction and drop cuvettes onto a second chute that extends in a second direction.

The chute 130 may be inclined toward the cuvette loading assembly 110 to enable the cuvettes 112 to slide along the chute 130 from the feeder 108 to the cuvette loading assembly 110. The chute 130 may drop a vertical distance V31 and may extend a horizontal distance H31 and have a slope V31/H31 (FIG. 3). The slope may provide enough gravitational force to overcome frictional forces between the cuvettes 112 and the chute 130 so that the cuvettes 112 may slide from the feeder 108 to the cuvette loading assembly 110.

As shown in FIG. 1B, the first rail 132A and the second rail 132B may be inclined toward the space 132C. The inclines guide the cuvettes 112 toward the center of the space 132C for improved alignment. The incline further reduces the area of the lower surface 212 (FIG. 2C) of the lip 202 or of the surfaces (e.g., sides 222) of the support members 220 that contact the first rail 132A and the second rail 132B, which may improve the ability of the cuvettes 112 to slide along the chute 130.

The first rail 132A may have an upper surface 136A and the second rail 132B may have an upper surface 136B. The upper surface 136A and the upper surface 136B may be materials that have low coefficients of friction with the lower surface 212 (FIG. 2B) of the lip 202. The low coefficient of friction enables the cuvettes 112 to slide along the chute 130. The lower surface 212 of the lip 202 and the upper surface 136A and the upper surface 136B may have low static friction so that cuvettes 112 may be stopped by a gate on the chute 130 and return to sliding when the gate is removed.

The first rail 132A may have an end 133A and the second rail 132B may have an end 133B. A deflector 134 may be located a distance D12 from the end 133A and the end 133B. The distance D12 may be greater than the widest length of a cuvette 112. For example, the distance D12 may be greater than the widest portion of the lip 202 of a cuvette 112. The cuvettes 112 may contact the deflector 134 upon exiting the chute 130 and may be deflected or otherwise guided into a receptacle 122 in the incubation ring 102 by contact with the deflector 134.

The cuvette loading assembly 110 may provide a staging area for cuvettes 112 before they are inserted into receptacles 122 in the incubation ring 102. In the embodiment of FIG. 1A, the cuvette 112A is in a staging area. The cuvette loading assembly 110 may include a first gate assembly 150A and a second gate assembly 150B. The first gate assembly 150A may be a mirror image of the second gate assembly 150B and both may operate in the same manner. The first gate assembly 150A may include a first gate 152A and the second gate assembly 150B may include a second gate 152B. The first gate 152A may include a first knife portion 156A and the second gate 152B may include a second knife portion 156B. The first knife portion 156A may include a beveled portion 157. The beveled portion 157 enables the first gate 152A to move between adjacent cuvettes 112. For example, the beveled portion 157 may have a point or the like that enables the first gate 152A to enter between adjacent cuvettes 112 that may be in contact with each other.

The embodiments of the cuvette loading assembly 110 depicted in FIGs. 1B and 3 show the first gate 152A and the second gate 152B located below the chute 130. In other embodiments, the first gate 152A and the second gate 152B may be located above the chute 130. In the embodiment depicted in FIG. 1A, the first gate 152A is in a first or retracted position and the second gate 152B is in a second or extended position, which may be referred to as a first state of the clinical analyzer 100. As described herein, the positions of the first gate 152A and the second gate 152B change with the operation of the clinical analyzer 100.

A support 158 (FIG. 1A) may be in a fixed location relative to the first gate 152A and the second gate 152B. The first gate 152A and the second gate 152B may be moveable relative to the support 158 and may pass through receptacles (not shown) in the support 158. A first spring 160A may extend between the support 158 and a first member 162A fixed to the first gate 152A. A second spring 160B may extend between the support 158 and a second member 162B fixed to the second gate 152B. The first spring 160A and the second spring 160B may bias the first gate 152A and the second gate 152B, respectively, in a direction 166. For example, the first spring 160A and the second spring 160B may bias the first gate 152A and the second gate 152B in the first or retraced position. Other devices may be used to bias the first gate 152A and the second gate 152B in the direction 166.

A first cam follower 170A may be coupled to the first gate 152A and a second cam follower 170B may be coupled to the second gate 152B. Both the first cam follower 170A and the second cam follower 170B may include wheels that rotate relative to the first gate 152A and the second gate 152B, respectively. The first cam follower 170A may contact a first cam 172A and the second cam follower 170B may contact a second cam 172B. For example, the first spring 160A may bias the first cam follower 170A against the first cam 172A and the second spring 160B may bias the second cam follower 170B against the second cam 172B. In some embodiments, the cam followers may be rigid members that slide against the first cam 172A and the second cam 172B.

The first cam 172A and the second cam 172B may be coupled to a moveable cam support 180 (FIG. 1B) that is moveable in the Z-direction. For example, an actuator 181 may move the cam support 180 in the Z-direction in response to instructions received from a processor 182. Both the first cam 172A and the second cam 172B may be contoured in the X-direction such that the vertical position (e.g., Z-direction) of the cam support 180 determines the position of the first gate 152A and the second gate 152B in the X-direction. For example, as the cam support 180 moves in the Z-direction, the first cam follower 170A and the second cam follower 170B follow the contours of the first cam 172A and the second cam 172B, respectively, in the X-direction, which causes the first gate 152A and the second gate 152B to move in the X-direction (e.g., extend and retract between the first and second positions). As described herein, the movement of the first gate 152A and the second gate 152B in the X-direction enables or prevents cuvettes 112 from loading into the incubation ring 102.

A plunger 184 may be coupled to the cam support 180. The plunger 184 may be positioned over the receptacle 122A. The plunger 184 may seat or otherwise position cuvettes 112 (e.g., the cuvette 112A) in the receptacles 122 in the incubation ring 102. During operation, the cam support 180 may move downward in the Z-direction toward the incubation ring 102. During this movement, the plunger 184 may enter the opening 216 (FIG. 2A) in the lip 202 of a cuvette 112 and force the cuvette 112 into a receptacle 122. Thus, the plunger 184 may seat otherwise improperly seated cuvettes 112 into receptacles 122 in the incubation ring 102. In some embodiments, an end 185 of the plunger 184 may have tapers or bevels 186 (FIG. 1F) that improve insertion of the plunger 184 into an opening 216 of a misaligned cuvette 112.

FIG. 4 shows a cross-sectional view of an embodiment of an end 185 of the plunger 184. The end 185 depicted in FIG. 4 includes a sensor 418 to indicate whether a cuvette 112 (FIG. 1B) is properly seated in a receptacle 122 of the incubation ring 102. The end 185 may include a body 404 and a tip 406 that is moveable relative to the body 404. The tip 406 may be coupled to or integrally formed with a piston 410 that is moveable in the Z-direction in a cavity 411 within the body 404. The piston 410 may include an upper surface 412 located within the body 404. A spring mechanism 416 may bias the piston 410 in the Z-direction out of the body 404. A mechanism (not shown) may limit the distance in which the piston 410 may extend from the body 404.

The body 404 may include the sensor 418 that indicates the location of the piston 410. For example, the sensor 418 may generate a signal in response to the piston 410 reaching a predetermined location within the body 404. The sensor 418 depicted in FIG. 4 includes a light emitter 420 and a photodetector 422 and a light path therebetween. When the piston 410 is extended as shown in FIG. 4, the light path extends between the light emitter 420 and the photodetector 422. Light incident to the photodetector 422 causes the photodetector 422 to generate a signal indicative of the piston 410 being below the sensor 418. When the piston 410 moves so as to break the light path, the signal generated by the photodetector 422 changes to indicate that the piston 410 is located at or above the sensor 418. The processor 182 may be electrically coupled to the photodetector 422 and may detect the change in the signal generated by the photodetector 422.

As described above, the plunger 184 may seat cuvettes 112 (FIG. 2B) into receptacles 122 (e.g., cuvette 112A into receptacle 122A) in the incubation ring 102. When the plunger 184 pushes a cuvette 112 into a receptacle 122, the end 185 may contact a lower end 208 (FIG. 2B) of a cuvette 112. The force applied by the plunger 184 may overcome a spring force applied by the spring mechanism 416, which causes the piston 410 to move into the cavity 411 and break the light path between the light emitter 420 and the photodetector 422. The processor 182 may interpret the change in signal generated by the photodetector 422 as an indication that the cuvette 112 is properly seated in the receptacle 122. If the force applied by the plunger 184 in the Z-direction is high when the light path is broken, the processor 182 may determine that the cuvette is not properly seated. If the light path is not broken or no force is able to be exerted by the plunger 184, the processor 182 may determine that a cuvette is not loaded into the receptacle in the incubation ring 102. Other sensors may be used in the end 185. For example, a pressure sensor may indicate the position of the piston 410 within the cavity 411.

Referring again to FIGs. 1A and 1B, the first cam 172A and the second cam 172B may have several positions in the Z-direction relative to the first cam follower 170A and the second cam follower 170B. The clinical analyzer 100 is referred to as being in different states depending on which positions of the first cam 172A and the second cam 172B contact the first cam follower 170A and the second cam follower 170B, respectively. The embodiment depicted in FIG. 1B shows three different positions on the cams 172A, 172B, a first position Z11, a second positon Z12, and a third position Z13. When the cams 172A, 172B are positioned so that the first position Z11 contacts the cam followers 170A, 170B, the clinical analyzer 100 is in a first state. When the cams 172A, 172B are positioned so that the second position Z12 contacts the cam followers 170A, 170B, the clinical analyzer 100 is in a second state. When the cams 172A, 172B are positioned so that the third position Z13 contacts the cam followers 170A, 170B, the clinical analyzer 100 is in a third state. In the first state, as depicted in FIGs. 1A and 1B, the first gate 152A is in the retracted position and the second gate 152B is in the extended position. Thus, the cuvette 112A is able to slide to the second gate 152B where it is stopped by the second gate 152B. Specifically, the first gate 152A is retracted so that the cuvette 112A is free to slide along the chute 130 to the second gate 152B.

As the cam support 180 moves downward in the Z-direction, the position Z12 is reached as shown in FIGs. 1C and 1D, which places the clinical analyzer 100 in the second state. In the second state, both the first gate 152A and the second gate 152B are extended to block cuvettes 112 from sliding along the chute 130 as shown in FIGs. 1C and 1D. In the second state, the cuvettes 112 are singulated so that the single cuvette 112A is positioned between the first gate 152A and the second gate 152B. In other embodiments, one or more cuvettes 112 may be receivable between the first gate 152A and the second gate 152B.

As the cam support 180 continues to move downward in the Z-direction, the position Z13 is reached as shown in FIGs. 1E and 1F, which places the clinical analyzer 100 in the third state. In the third state, the first gate 152A is extended and the second gate 152B is retracted. In this configuration, the cuvette 112A is released from the second gate 152B and slides down and off the chute 130 and falls into the receptacle 122A. The cuvette 112A may contact or otherwise be guided by the deflector 134 after it leaves the chute 130 to be guided into the receptacle 122A.

The cam support 180 may continue to travel downward in the Z-direction to a point where the end 185 of the plunger 184 contacts the bottom of the cuvette 112A as shown in FIG. 1G. This configuration may be referred to as the fourth state of the clinical analyzer 100. The position of the cam support 180 may be monitored by the processor 182 to determine if the plunger 184 is at a specific location in the Z-direction when the sensor 418 (FIG. 4) detects that the plunger 184 has contacted the bottom of the cuvette 112A. If contact is made above the specific location in the Z-direction, an indication (e.g., an alarm) may be provided to indicate that the cuvette 112A is not properly seated in the receptacle 122A. If the sensor 418 does not sense the bottom of a cuvette 112, then an indication may be provided indicating that there is not a cuvette located in the receptacle 122A.

In other embodiments, the plunger 184 does not extend fully into the cuvette 112A. Rather, the tip 406 (FIG. 4) may be tapered so than it may partially extend into the opening 216 (FIG. 2A) of the cuvette 112A. For example, the lower portion of the tip 406 may be smaller than the opening 216 and the upper portion of the tip 406 may be larger than the opening 216. In this embodiment, the plunger 184 does not have to move the entire length D21 (FIG. 2B) of the cuvette 112A to determine if the cuvette 112A is properly seated. For example, if the plunger 184 moves to where the tip 406 should contact the upper surface 210 of the cuvette 112A, and the sensor 418 senses the cuvette 112A, the processor 182 may determine that the cuvette 112A is properly seated. If the sensor 418 detects the cuvette 112A at a position in the z-direction that is too high, the processor 182 may determine that the cuvette 112A is not seated properly. If the plunger 184 moves too far down in the z-direction without contacting a cuvette, the processor 182 may indicate that the cuvette 112A is not present in the receptacle 122A (FIG. 1D). In some embodiments, at least a portion of the plunger 184 may pass into or through the receptacle 122A.

After the cuvette 112A is seated in the receptacle 122A, the cam support 180 may be raised in the Z-direction. After the plunger 180 has cleared the incubation ring 102, the incubation ring 102 may rotate about the centerpoint 116 to position an empty receptacle 122 below the end of the chute 130 to receive another cuvette 112.

When the position Z12 is reached, both the first gate 152A and the second gate 152B are in the extended position as shown in FIG. 1C, but without a cuvette located between them. As the cam support 180 continues to rise in the Z-direction, the position Z11 is reached, which retracts the first gate 152A so that another cuvette 112 may be positioned adjacent the second gate 152B as shown in FIG. 1A. The above-described process may then be repeated to singulate the cuvettes 112 and load another cuvette into a receptacle 122 in the incubation ring 102.

The process described above includes the first cam 172A and the second cam 172B contacting the first cam follower 170A and the second cam follower 170B to move the first gate 152A and the second gate 152B. Other devices, such as actuators, may be implemented to move the first gate 152A and the second gate 152B.

The clinical analyzer 100 and the loading assembly 110 has been described as loading cuvettes into the incubation ring 102. In other embodiments, the loading apparatus may load cuvettes into other locations within or coupled to the clinical analyzer 100. Accordingly, the plunger 184 may seat and determine proper placement of the cuvettes in these other locations.

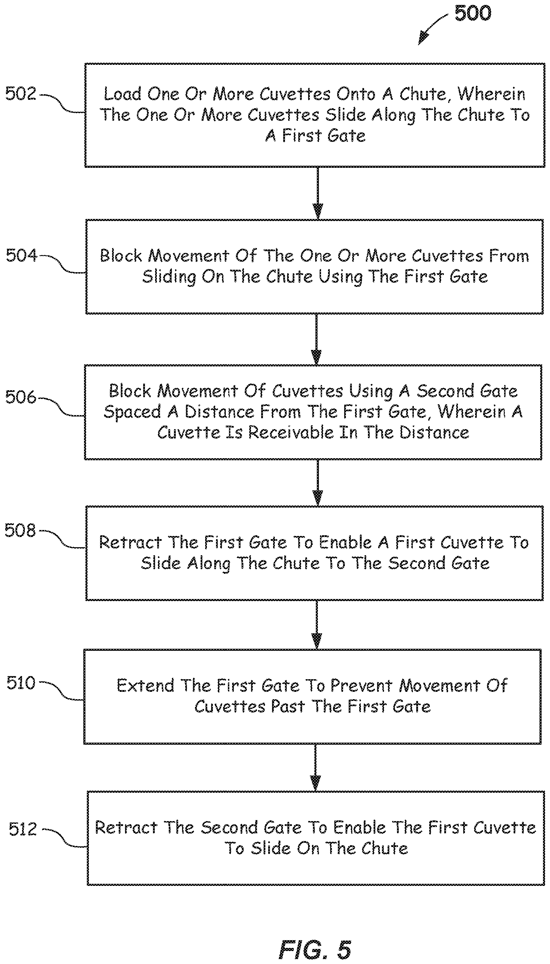

In another aspect, a method of transporting cuvettes in a clinical analyzer is provided and described by the flowchart 500 of FIG. 5. The method, in 502, includes loading one or more cuvettes (e.g., cuvettes 112) onto a chute (e.g., chute 130), wherein the one or more cuvettes slide along the chute to a first gate (e.g., first gate 152A). The method, in 504, includes blocking movement of the one or more cuvettes from sliding along the chute using the first gate. In 506, the method includes blocking movement of cuvettes using a second gate (e.g., second gate 152B) spaced a distance from the first gate, wherein a cuvette is receivable in the distance. The method, in 508, includes retracting the first gate to enable a first cuvette (e.g., cuvette 112A) to slide along the chute to the second gate. The method, in 510, includes extending the first gate to prevent movement of cuvettes past the first gate. The method, in 512, includes retracting the second gate to enable the first cuvette to slide along the chute.

The foregoing description discloses example embodiments of the disclosure. Modifications of the above-disclosed apparatus, systems, and methods which fall within the scope of the disclosure will be readily apparent to those of ordinary skill in the art. Accordingly, while the present disclosure has been disclosed in connection with example embodiments, it should be understood that other embodiments may fall within the scope of the disclosure, as defined by the claims.

## Claims

1. A clinical analyzer (100), comprising:
a cuvette hopper (106) configured to receive a plurality of cuvettes (112),
a first location proximate the cuvette hopper (106);
a second location;
a chute (130) extending between the first location and the second location, the chute (130) configured to enable cuvettes (112) to slide from the first location to the second location; and
a loading assembly (110) including a first gate (152A) moveable between a first position where cuvettes (112) are enabled to slide along the chute (130) and a second position where cuvettes (112) are blocked from sliding along the chute (130), a second gate (152B) moveable between a first position where cuvettes (112) are enabled to slide along the chute (130) and a second position where cuvettes (112) are blocked from sliding along the chute (130), and a space between the first gate (152A) and the second gate (152B), wherein a cuvette (112) is receivable in the space;
the clinical analyzer (100) further comprising an incubation ring (102) located at the second position, the incubation ring (102) having one or more receptacles (122), each receptacle (122) configured to receive one cuvette (112), wherein, when the second gate (152B) is in the first, retracted position, it enables a cuvette, when present, to move along the chute (130, slide off the chute (130) and into a receptacle (122) in the incubation ring (102).

2. The clinical analyzer (100) of claim 1, wherein the chute (130) comprises a first rail (132A) and a second rail (132B) with a space (132C) therebetween, and wherein cuvettes (112) are at least partially receivable in the space (132C) between the first rail (132A) and the second rail (132B).

3. The clinical analyzer (100) of claim 2, wherein the space (132C) between the first rail (132A) and the second rail (1328) is configured to receive the container portion of the cuvettes (112), wherein the cuvettes have a container portion (200) and lip (202) extending from the container portion (200), and wherein the first rail and the second rail are configured to contact the lip (202) when the container portion (200) is received in the space (132C).

4. The clinical analyzer (100) of claim 1, wherein the loading assembly (110) is configured to enable a predetermined number of cuvettes (112) to be located between the two gates (152A, 152B).

5. The clinical analyzer (100) of claim 1, wherein the loading assembly (110) is configured to enable a single cuvette (112) to be located between the two gates (152A, 152B).

6. The clinical analyzer (100) of claim 1, wherein the loading assembly (110) comprises:
a first gate (152A) moveable between a first position wherein the first gate (152A) enables one or more cuvettes (112) to slide along the chute (130) and a second position wherein the first gate (152A) blocks one or more cuvettes (112) from sliding along the chute (130); and
a second gate (152B) spaced a distance from the first gate (152A) and moveable between a first position wherein the second gate (152B) enables one or more cuvettes (112) to slide along the chute (130) and a second position wherein the second gate (152B) blocks one or more cuvettes (112) from sliding along the chute (130), wherein one or more cuvettes (112) are receivable in the distance between the first gate (152A) and the second gate (1528);
a first cam follower (170A) coupled to the first gate (152A);
a second cam follower (1708) coupled to the second gate (1528);
a first cam (172A) contacting the first cam follower (170A); and
a second cam (1728) contacting the second cam follower (1708),
wherein the first gate (152A) is moveable in response to movement of the first cam (172A) and the second gate (152B) is moveable in response to movement of the second cam (1728).

7. The clinical analyzer (100) of claim 6, wherein the incubation ring (102) has an upper surface (118) and a lower surface (120) and wherein its one or more receptacles (122) are a plurality of receptacles (122) extending between the upper surface (118) and the lower surface (120) and wherein each of the receptacles (122) is configured to receive a cuvette (112); the clinical analyzer (100) further comprising:
a cam support (180) attached to the first cam (172A) and the second cam (1728), the cam support (180) configured to move the first cam (172A) and the second cam (172B) simultaneously; and
a plunger (184) coupled to the cam support (180), the plunger (184) configured to contact a cuvette (112) received in thereceptacle (122),wherein the plunger (184) includes one or more sensors (418), the one or more sensors (418) configured to generate a first signal when a cuvette (112) is properly received in a receptacle (122) and a second signal when the cuvette (112) is not properly received in the receptacle (122).

8. The clinical analyzer (100) of claim 1, wherein the incubation ring (122) has an upper surface (118), a lower surface (120) and wherein its one or more receptacles (122) are a plurality of receptacles (122) extending between the upper surface (118) and the lower surface (120), wherein each of the receptacles is configured to receive a cuvette (112); the clinical analyzer further comprising a plunger (184) moveable between a first position and a second positon, the plunger (184) not contactable with a cuvette (112) in the first position and the plunger (184) contactable with a cuvette (112) received in a receptacle (122) in the second position,
wherein the plunger (184) includes one or more sensors (418), the one or more sensors (418) configured to generate a first signal in response to the plunger (184) not contacting a cuvette (112) and a second signal in response to the plunger (184) contacting a cuvette (112).

9. The clinical analyzer (100) of claim 1, further comprising:
a first cam (172A) moveably contacting the first gate (152A), wherein the first gate (152A) moves between the first position and the second position in response to movement of the first cam (172A); and
a second cam (1728) moveably contacting the second gate (152B), wherein the second gate (152B) moves between the first position and the second position in response to movement of the second cam (1728).

10. The clinical analyzer (100) of claim 9, further comprising:
a moveable cam support (180), wherein the first cam (172A) and the second cam (1728) are attached to the cam support (180) and are moveable with the cam support (180); and
a plunger (184) attached to the cam support (180), the plunger (184) movable with the cam support (180) between a first position wherein the plunger (184) is not contactable with a cuvette (112) and a second position wherein the plunger (184) is contactable with a cuvette (112) received in a receptacle (122).

11. The clinical analyzer (100) of claim 1, further comprising a plunger (184) movable between a first position wherein the plunger (184) is not contactable with a cuvette (112) and a second position wherein the plunger (184) is contactable with a cuvette (112) received in a receptacle (122).

12. The clinical analyzer (100) of claim 11, further comprising a sensor (418) coupled to the plunger (184), the sensor (418) configured to generate a first signal in response to the plunger (184) not contacting a cuvette (112) and a second signal in response to the plunger (184) contacting a cuvette (112).

13. A method (500) of transporting cuvettes (112) in a clinical analyzer (100) as claimed in claim 1, comprising, in the order as indicated:
loading (502) one or more cuvettes (112) onto a chute (130), wherein the one or more cuvettes (112) slide along the chute (130) to a first gate (152A);
blocking movement (504) of the one or more cuvettes (112) from sliding along the chute (130) using the first gate (152A);
blocking movement (506) of cuvettes (112) using a second gate (152B) spaced a distance from the first gate (152A), wherein a cuvette (112) is receivable in the distance;
retracting (508) the first gate (152A) to enable a first cuvette (112) to slide along the chute (130) to the second gate (152B);
extending (510) the first gate (152A) to prevent movement of cuvettes (112) past the first gate (152A); and
retracting (512) the second gate (152B) to enable the first cuvette (112) to slide along the chute (130).

14. The method (500) of claim 13, followed by:
sliding the first cuvette off the chute (130) and into a receptacle (122);
extending a plunger (184) toward an opening (216) in the first cuvette (112);
generating a first signal in response to the plunger (184) not contacting the first cuvette (112); and
generating a second signal in response to the plunger (184) contacting the first cuvette (112).

## Patentansprüche

1. Klinisches Analysegerät (100), umfassend:
einen Küvettenbehälter (106), der dazu ausgelegt ist, eine Vielzahl von Küvetten (112) aufzunehmen,
eine erste Position in der Nähe des Küvettenbehälters (106);
eine zweite Position;
eine Rutsche (130), die sich zwischen der ersten Position und der zweiten Position erstreckt, wobei die Rutsche (130) dazu ausgelegt ist, den Küvetten zu ermöglichen (112), von der ersten Position zur zweiten Position zu gleiten; und
eine Beladungsanordnung (110), die ein erstes Tor (152A) aufweist, das zwischen einer ersten Position, in der die Küvetten (112) entlang der Rutsche (130) gleiten können, und einer zweiten Position, in der die Küvetten (112) daran gehindert werden, die Rutsche (130) entlang zu gleiten, beweglich ist, ein zweites Tor (152B), das zwischen einer ersten Position, in der die Küvetten (112) die Rutsche (130) entlang gleiten können, und einer zweiten Position, in der die Küvetten (112) daran gehindert werden, die Rutsche (130) entlang zu gleiten, beweglich sind, und einen Zwischenraum zwischen dem ersten Tor (152A) und dem zweiten Tor (152B), wobei eine Küvette (112) in dem Zwischenraum aufnehmbar ist;
wobei das klinische Analysegerät (100) ferner einen Inkubationsring (102) umfasst, der sich an der zweiten Position befindet, wobei der Inkubationsring (102) eine oder mehrere Aufnahmen (122) hat,
wobei jede Aufnahme (122) dazu ausgelegt ist, eine Küvette (112) aufzunehmen, wobei, wenn das zweite Tor (152B) in der ersten eingefahrenen Position ist, es einer Küvette, wenn vorhanden, ermöglicht, sich die Rutsche (130) entlang zu bewegen, die Rutsche (130) herunter und in eine Aufnahme (122) in dem Inkubationsring (102) zu gleiten.

2. Klinisches Analysegerät (100) nach Anspruch 1, wobei die Rutsche (130) eine erste Schiene (132A) und eine zweite Schiene (132B) mit einem Zwischenraum dazwischen umfasst, und wobei die Küvetten (112) mindestens teilweise in dem Zwischenraum (132C) zwischen der ersten Schiene (132A) und der zweiten Schiene (132B) aufnehmbar sind.

3. Klinisches Analysegerät (100) nach Anspruch 2, wobei der Zwischenraum (132C) zwischen der ersten Schiene (132A) und der zweiten Schiene (132B) dazu ausgelegt ist, den Behälterabschnitt der Küvetten (112) aufzunehmen, wobei die Küvetten einen Behälterabschnitt (200) und eine Lippe (202), die sich von dem Behälterabschnitt (200) erstreckt, haben, und wobei die erste Schiene und die zweite Schiene dazu ausgelegt sind, die Lippe (202) zu kontaktieren, wenn der Behälterabschnitt (200) in dem Zwischenraum (132C) aufgenommen wird.

4. Klinisches Analysegerät (100) nach Anspruch 1, wobei die Beladungsanordnung (110) dazu ausgelegt ist, zu ermöglichen, dass eine vorbestimmte Anzahl an Küvetten (112) zwischen den zwei Toren (152A, 152B) angeordnet wird.

5. Klinisches Analysegerät (100) nach Anspruch 1, wobei die Beladungsanordnung (110) dazu ausgelegt ist, zu ermöglichen, dass eine einzelne Küvette (112) zwischen den zwei Toren (152A, 152B) angeordnet wird.

6. Klinisches Analysegerät (100) nach Anspruch 1, wobei die Beladungsanordnung (110) umfasst:
ein erstes Tor (152A), das zwischen einer ersten Position, in der das erste Tor (152A) einer oder mehreren Küvetten (112) ermöglicht, die Rutsche (130) entlang zu gleiten, und einer zweiten Position, in der das erste Tor (152A) eine oder mehrere Küvetten (112) daran hindert, die Rutsche (130) entlang zu gleiten, beweglich ist; und
ein zweites Tor (152B), das von dem ersten Tor (152A) beabstandet und zwischen einer ersten Position, in der das zweite Tor (152B) einer oder mehreren Küvetten (112) ermöglicht, die Rutsche (130) entlang zu gleiten, und einer zweiten Position, in der das zweite Tor (152A) eine oder mehrere Küvetten (112) daran hindert, die Rutsche (130) entlang zu gleiten, beweglich ist, wobei eine oder mehrere Küvetten (112) in dem Abstand zwischen dem ersten Tor (152A) und dem zweiten Tor (152B) aufnehmbar sind;
einen ersten Nockenmitnehmer (170A), der mit dem ersten Tor (152A) gekoppelt ist;
einen zweiten Nockenmitnehmer (170B), der mit dem zweiten Tor (152B) gekoppelt ist;
einen ersten Nocken (172A), der den ersten Nockenmitnehmer (170A) kontaktiert; und
einen zweiten Nocken (172B), der den zweiten Nockenmitnehmer (170B) kontaktiert,
wobei das erste Tor (152A) in Reaktion auf die Bewegung des ersten Nockens (172A) beweglich ist und das zweite Tor (152B) in Reaktion auf die Bewegung des zweiten Nockens (172B) beweglich ist.

7. Klinisches Analysegerät (100) nach Anspruch 6, wobei der Inkubationsring (102) eine Oberseite (118) und eine Unterseite (120) hat und wobei seine eine oder mehreren Aufnahmen (122) eine Vielzahl von Aufnahmen (122) sind, die sich zwischen der Oberseite (118) und der Unterseite (120) erstrecken und wobei jede der Aufnahmen (122) dazu ausgelegt ist, eine Küvette (112) aufzunehmen; wobei das klinische Analysegerät (100) ferner umfasst:
eine Nockenunterstützung (180), die an dem ersten Nocken (172A) und dem zweiten Nocken (172B) angebracht ist, wobei die Nockenunterstützung (180) dazu ausgelegt ist, den ersten Nocken (172A) und den zweiten Nocken (172B) gleichzeitig zu bewegen; und
einen Kolben (184), der mit der Nockenunterstützung (180) gekoppelt ist, wobei der Kolben (184) dazu ausgelegt ist, eine Küvette (112), die in der Aufnahme (122) aufgenommen ist, zu kontaktieren, wobei der Kolben (184) einen oder mehrere Sensoren (418) aufweist, wobei der eine oder die mehreren Sensoren (418) dazu ausgelegt sind, ein erstes Signal zu erzeugen, wenn eine Küvette (112) richtig in einer Aufnahme (122) aufgenommen ist, und ein zweites Signal, wenn die Küvette (112) nicht richtig in der Aufnahme (122) aufgenommen ist.

8. Klinisches Analysegerät (100) nach Anspruch 1, wobei der Inkubationsring (122) eine Oberseite (118), eine Unterseite (120) hat und wobei seine eine oder mehreren Aufnahmen (122) eine Vielzahl von Aufnahmen (122) sind, die sich zwischen der Oberseite (118) und der Unterseite (120) erstrecken, wobei jede der Aufnahmen (122) dazu ausgelegt ist, eine Küvette (112) aufzunehmen; wobei das klinische Analysegerät ferner einen Kolben (184) umfasst, der zwischen einer ersten Position und einer zweiten Position beweglich ist, wobei der Kolben (184) in der ersten Position nicht mit einer Küvette (112) kontaktierbar ist und der Kolben (184) in der zweiten Position mit einer Küvette (112) kontaktierbar ist, die in einer Aufnahme (122) aufgenommen ist,
wobei der Kolben (184) einen oder mehrere Sensoren (418) aufweist, wobei der eine oder die mehreren Sensoren (418) dazu ausgelegt sind, ein erstes Signal in Reaktion darauf zu erzeugen, dass der Kolben (184) keine Küvette (112) kontaktiert und ein zweites Signal in Reaktion darauf, dass der Kolben (184) eine Küvette (112) kontaktiert.

9. Klinisches Analysegerät (100) nach Anspruch 1, ferner umfassend:
einen ersten Nocken (172A), der beweglich das erste Tor (152A) kontaktiert, wobei sich das erste Tor (152A) in Reaktion auf die Bewegung des ersten Nockens (172A) zwischen der ersten Position und der zweiten Position bewegt; und
einen zweiten Nocken (1728), der beweglich das zweite Tor (152B) kontaktiert, wobei sich das zweite Tor (152B) in Reaktion auf die Bewegung des zweiten Nockens (172B) zwischen der ersten Position und der zweiten Position bewegt.

10. Klinisches Analysegerät (100) nach Anspruch 9, ferner umfassend:
eine bewegliche Nockenunterstützung (180), wobei der erste Nocken (172A) und der zweite Nocken (172B) an der Nockenunterstützung (180) angebracht und mit der Nockenunterstützung (180) beweglich sind; und
einen Kolben (184), der an der Nockenunterstützung (180) angebracht ist, wobei der Kolben (184) mit der Nockenunterstützung (180) zwischen einer ersten Position, in der der Kolben (184) mit keiner Küvette (112) kontaktierbar ist, und einer zweiten Position, in der der Kolben (184) mit einer Küvette (112) kontaktierbar ist, die in einer Aufnahme (122) aufgenommen ist, beweglich ist.

11. Klinisches Analysegerät (100) nach Anspruch 1, ferner umfassend einen Kolben (184), der zwischen einer ersten Position, in der der Kolben (184) mit keiner Küvette (112) kontaktierbar ist, und einer zweiten Position, in der der Kolben (184) mit einer Küvette (112) kontaktierbar ist, die in einer Aufnahme (122) aufgenommen ist, beweglich ist.

12. Klinisches Analysegerät (100) nach Anspruch 11, ferner umfassend einen Sensor (418), der mit dem Kolben (184) gekoppelt ist, wobei der Sensor (418) dazu ausgelegt ist, ein erstes Signal in Reaktion darauf zu erzeugen, dass der Kolben (184) keine Küvette (112) kontaktiert und ein zweites Signal in Reaktion darauf, dass der Kolben (184) eine Küvette (112) kontaktiert.

13. Verfahren (500) zum Transportieren von Küvetten (112) in einem klinischen Analysegerät (100) nach Anspruch 1, umfassend in der angegebenen Reihenfolge:
Laden (502) von einer oder mehreren Küvetten (112) auf eine Rutsche (130), wobei die eine oder mehreren Küvetten (112) die Rutsche (130) entlang zu einem ersten Tor (152A) gleiten;
Behindern der Bewegung (504) der einen oder mehreren Küvetten (112) mithilfe des ersten Tores (152A), damit sie nicht die Rutsche (130) entlang gleiten;
Blockieren der Bewegung (506) der Küvetten (112) mithilfe eines zweiten Tores (152B), das von dem ersten Tor (152A) beabstandet ist, wobei eine Küvette (112) in dem Abstand aufnehmbar ist;
Einfahren (508) des ersten Tores (152A), um einer ersten Küvette (112) zu ermöglichen, die Rutsche (130) entlang zum zweiten Tor (152B) zu gleiten;
Ausfahren (510) des ersten Tores (152A), um die Bewegung der Küvetten (112) an dem ersten Tor (152A) vorbei zu verhindern; und
Einfahren (512) des zweiten Tores (152B), um einer ersten Küvette (112) zu ermöglichen, die Rutsche (130) entlang zu gleiten.

14. Verfahren (500) nach Anspruch 13, gefolgt von:
Heruntergleiten der ersten Küvette von der Rutsche (130) und hinein in eine Aufnahme (122);
Ausfahren eines Kolbens (184) in Richtung einer Öffnung (216) in der ersten Küvette (112);
Erzeugen eines ersten Signals in Reaktion darauf, dass der Kolben (184) die erste Küvette (112) nicht kontaktiert; und
Erzeugen eines zweiten Signals in Reaktion darauf, dass der Kolben (184) die erste Küvette (112) kontaktiert.

## Revendications

1. Analyseur clinique (100), comprenant:
une trémie à cuvettes (106) configurée pour recevoir une pluralité de cuvettes (112),
un premier emplacement à proximité de la trémie à cuvettes (106);
un deuxième emplacement;
une goulotte (130) s'étendant entre le premier emplacement et le deuxième emplacement, la goulotte (130) étant configurée pour permettre aux cuvettes (112) de coulisser du premier emplacement au deuxième emplacement; et
un ensemble de chargement (110) comprenant une première porte (152A) mobile entre une première position où les cuvettes (112) peuvent coulisser le long de la goulotte (130), et une deuxième position où les cuvettes (112) sont empêchées de coulisser le long de la goulotte (130), une deuxième porte (1528) mobile entre une première position où les cuvettes (112) peuvent coulisser le long de la goulotte (130), et une deuxième position où les cuvettes (112) sont empêchées de coulisser le long de la goulotte (130), et un espace entre la première porte (152A) et la deuxième porte (1528), dans lequel une cuvette (112) peut être reçue dans l'espace;
l'analyseur clinique (100) comprenant en outre un anneau d'incubation (102) situé à la deuxième position, l'anneau d'incubation (102) ayant un ou plusieurs réceptacles (122), chaque réceptacle (122) étant configuré pour recevoir one cuvette (112), dans lequel, lorsque la deuxième porte (1528) se trouve dans la première position rétractée, elle permet à une cuvette, lorsqu'elle est présente, de se déplacer le long de la goulotte (130, de coulisser hors de la goulotte (130) et dans un réceptacle (122) dans l'anneau d'incubation (102).

2. L'analyseur clinique (100) selon la revendication 1, dans lequel la goulotte (130) comprend un premier rail (132A) et un deuxième rail (1328) avec un espace (132C) entre eux, et dans lequel des cuvettes (112) sont au moins partiellement recevables dans l'espace (132C) entre le premier rail (132A) et le deuxième rail (1328).

3. L'analyseur clinique (100) selon la revendication 2, dans lequel l'espace (132C) entre le premier rail (132A) et le deuxième rail (1328) est configuré pour recevoir la partie conteneur des cuvettes (112), dans lequel les cuvettes ont une partie conteneur (200) et une lèvre (202) s'étendant depuis la partie conteneur (200), et dans lequel le premier rail et le deuxième rail sont configurés pour entrer en contact avec la lèvre (202) lorsque la partie conteneur (200) est reçue dans l'espace (132C).

4. L'analyseur clinique (100) selon la revendication 1, dans lequel l'ensemble de chargement (110) est configuré pour permettre à un nombre prédéterminé de cuvettes (112) d'être situées entre les deux portes (152A, 1528).

5. L'analyseur clinique (100) selon la revendication 1, dans lequel l'ensemble de chargement (110) est configuré pour permettre à une seule cuvette (112) d'être située entre les deux portes (152A, 1528).

6. L'analyseur clinique (100) selon la revendication 1, dans lequel l'ensemble de chargement (110) comprend:
une première porte (152A) mobile entre une première position, dans laquelle la première porte (152A) permet à une ou plusieurs cuvettes (112) de coulisser le long de la goulotte (130), et une deuxième position, dans laquelle la première porte (152A) empêche une ou plusieurs cuvettes (112) de coulisser le long de la goulotte (130); et
une deuxième porte (1528) espacée d'une certaine distance de la première porte (152A) et mobile entre une première position, dans laquelle la deuxième porte (1528) permet à une ou plusieurs cuvettes (112) de coulisser le long de la goulotte (130), et une deuxième position, dans laquelle la deuxième porte (1528) empêche une ou plusieurs cuvettes (112) de coulisser le long de la goulotte (130), dans lequel une ou plusieurs cuvettes (112) peuvent être reçues dans la distance entre la première porte (152A) et la deuxième porte (1528);
une première contre-came (170A) couplée à la première porte (152A);
une deuxième contre-came (1708) couplée à la deuxième porte (1528);
une première came (172A) en contact avec la première contre-came (170A); et
une deuxième came (1728) en contact avec la deuxième contre-came (1708),
dans lequel la première porte (152A) est mobile en réponse au mouvement de la première came (172A) et la deuxième porte (1528) est mobile en réponse au mouvement de la deuxième came (1728).

7. L'analyseur clinique (100) selon la revendication 6,
dans lequel l'anneau d'incubation (102) a une surface supérieure (118) et une surface inférieure (120), et dans lequel ses un ou plusieurs réceptacles (122) sont une pluralité de réceptacles (122) s'étendant entre la surface supérieure (118) et la surface inférieure (120), et dans lequel chacun des réceptacles (122) est configuré pour recevoir une cuvette (112);
l'analyseur clinique (100) comprenant en outre:
un support de came (180) fixé à la première came (172A) et la deuxième came (1728), le support de came (180) étant configuré pour déplacer la première came (172A) et la deuxième came (1728) simultanément; et
un piston (184) couplé au support de came (180), le piston (184) étant configuré pour entrer en contact avec une cuvette (112) reçue dans le réceptacle (122), le piston (184) comprenant un ou plusieurs capteurs (418), le ou les capteurs (418) étant configurés pour générer un premier signal lorsqu'une cuvette (112) est correctement reçue dans un réceptacle (122) et un deuxième signal lorsque la cuvette (112) n'est pas correctement reçue dans la réceptacle (122).

8. L'analyseur clinique (100) selon la revendication 1,
dans lequel l'anneau d'incubation (122) a une surface supérieure (118) et une surface inférieure (120), et dans lequel ses un ou plusieurs réceptacles (122) sont une pluralité de réceptacles (122) s'étendant entre la surface supérieure (118) et la surface inférieure (120), dans lequel chacun des réceptacles est configuré pour recevoir une cuvette (112); l'analyseur clinique comprenant en outre un piston (184) mobile entre une première position et une deuxième positon, le piston (184) ne pouvant pas être mis en contact avec with une cuvette (112) dans la première position, et le piston (184) pouvant être mis en contact avec une cuvette (112) reçue dans un réceptacle (122) dans la deuxième position,
dans lequel le piston (184) comprend un ou plusieurs capteurs (418), le ou les capteurs (418) étant configurés pour générer un premier signal en réponse au fait que le piston (184) n'entre pas en contact avec une cuvette (112) et un deuxième signal en réponse au fait que le piston (184) entre en contact avec une cuvette (112).

9. L'analyseur clinique (100) selon la revendication 1, comprenant en outre:
une première came (172A) entrant en contact de manière mobile avec la première porte (152A), dans lequel la première porte (152A) se déplace entre la première position et la deuxième position en réponse au mouvement de la première came (172A); et
une deuxième came (1728) entrant en contact de manière mobile avec la deuxième porte (1528), dans lequel la deuxième porte (1528) se déplace entre la première position et la deuxième position en réponse au mouvement de la deuxième came (1728).

10. L'analyseur clinique (100) selon la revendication 9, comprenant en outre:
un support de came mobile (180), dans lequel la première came (172A) et la deuxième came (1728) sont fixés au support de came (180) et sont mobiles avec le support de came (180); et
un piston (184) fixé au support de came (180), le piston (184) étant mobile avec le support de came (180) entre une première position, dans laquelle le piston (184) ne peut pas être mis en contact avec une cuvette (112), et une deuxième position, dans laquelle le piston (184) peut être mis en contact avec une cuvette (112) reçue dans un réceptacle (122).

11. L'analyseur clinique (100) selon la revendication 1, comprenant en outre un piston (184) mobile entre une première position, dans laquelle le piston (184) ne peut pas être mis en contact avec une cuvette (112), et une deuxième position, dans laquelle le piston (184) peut être mis en contact avec une cuvette (112) reçue dans un réceptacle (122).

12. L'analyseur clinique (100) selon la revendication 11, comprenant en outre un capteur (418) couplé au piston (184), le capteur (418) étant configuré pour générer un premier signal en réponse au fait que le piston (184) n'entre pas en contact avec une cuvette (112) et un deuxième signal en réponse au fait que le piston (184) entre en contact avec une cuvette (112).

13. Procédé (500) de transport de cuvettes (112) dans un analyseur clinique (100) selon la revendication 1, comprenant, dans l'ordre indiqué:
charger (502) une ou plusieurs cuvettes (112) sur une goulotte (130), dans lequel la ou les cuvettes (112) coulissent le long de la goulotte (130) vers une première porte (152A);
empêcher le mouvement (504) de la ou les cuvettes (112) de coulisser le long de la goulotte (130) en utilisant la première porte (152A);
empêcher le mouvement (506) des cuvettes (112) en utilisant une deuxième porte (1528) espacée d'une certaine distance de la première porte (152A), dans lequel une cuvette (112) peut être reçue dans la distance;
retirer (508) la première porte (152A) pour permettre à une première cuvette (112) de coulisser le long de la goulotte (130) vers la deuxième porte (1528);
étendre (510) la première porte (152A) pour empêcher le mouvement des cuvettes (112) au-delà de la première porte (152A); et
retirer (512) la deuxième porte (1528) pour permettre à la première cuvette (112) de coulisser le long de la goulotte (130).

14. Le procédé (500) selon la revendication 13, suivi de:
faire coulisser la première cuvette hors de la goulotte (130) et dans un réceptacle (122);
étendre un piston (184) vers une ouverture (216) dans la première cuvette (112);
générer un premier signal en réponse au fait que le piston (184) n'entre pas en contact avec la première cuvette (112); et
générer un deuxième signal en réponse au fait que le piston (184) entre en contact avec la première cuvette (112).
